# FASCICULE DE BREVET EUROPEEN

(11) **EP 4 214 172 B1**
(45) Date de publication et mention de la délivrance du brevet: **11.02.2026**
(21) Numéro de dépôt: 21785968.5
(22) Date de dépôt: 20.09.2021
(51) Int. Cl.: C03C 17/36

(54) **MATÉRIAU COMPRENANT UN SUBSTRAT MUNI D'UN EMPILEMENT DE COUCHES MINCES A PROPRIETES THERMIQUES**
MATERIAL MIT EINEM SUBSTRAT MIT EINEM STAPEL AUS DÜNNSCHICHTEN MIT THERMISCHEN EIGENSCHAFTEN
MATERIAL COMPRISING A SUBSTRATE PROVIDED WITH A STACK OF THIN LAYERS HAVING THERMAL PROPERTIES

(30) Priorité: 21.09.2020 FR 2009546
(43) Date de publication de la demande: 26.07.2023
(73) Titulaire: Saint-Gobain Glass France, 92400 Courbevoie (FR)
(72) Inventeur: JEAN, Cyril, 93310 Le Pré Saint-Gervais (FR); WANAKULE, Nisita, 75019 PARIS (FR)
(74) Mandataire: Saint-Gobain Recherche
(86) Numéro de dépôt international: PCT/FR2021/051597
(87) Numéro de publication internationale: WO 2022/058693

(56) Documents cités:
- WO-A1-2009/029466
- WO-A1-2009/115596
- WO-A1-2013/079400
- WO-A1-2014/177798
- WO-A1-2018/165645

## Description

L'invention concerne un matériau, tel qu'un vitrage, comprenant un substrat transparent revêtu d'un empilement de couches minces comprenant plusieurs couches fonctionnelles pouvant agir sur le rayonnement solaire et/ou le rayonnement infrarouge. L'invention concerne également les vitrages comprenant ces matériaux ainsi que l'utilisation de tels matériaux pour fabriquer des vitrages d'isolation thermique et/ou de protection solaire.

Ces vitrages peuvent être destinés aussi bien à équiper les bâtiments que les véhicules, en vue notamment de diminuer l'effort de climatisation et/ou d'empêcher une surchauffe excessive, vitrages dits « de contrôle solaire » et/ou diminuer la quantité d'énergie dissipée vers l'extérieur, vitrages dits « bas émissifs » entraînée par l'importance toujours croissante des surfaces vitrées dans les bâtiments et les habitacles de véhicules.

Des vitrages comprenant des substrats transparents revêtus d'un empilement de couches minces comprenant trois couches fonctionnelles métalliques, chacune disposée entre deux revêtements diélectriques ont été proposés afin d'améliorer la protection solaire tout en conservant une transmission lumineuse élevée. Ces empilements sont généralement obtenus par une succession de dépôts effectués par pulvérisation cathodique éventuellement assistée par champ magnétique. Ces vitrages sont qualifiés de sélectifs car ils permettent :
- de diminuer la quantité d'énergie solaire pénétrant à l'intérieur des bâtiments en présentant un faible facteur solaire (FS ou g),
- de garantir une transmission lumineuse élevée.

Selon l'invention, on entend :
- facteur solaire « g », le rapport en pourcentage entre l'énergie totale entrant dans le local à travers le vitrage et l'énergie solaire incidente,
- sélectivité « s », le rapport entre la transmission lumineuse et le facteur solaire TL/g.

La demande WO2017/006027 décrit un substrat revêtu d'un empilement à trois couches métalliques fonctionnelles à base d'argent. Les épaisseurs des trois couches fonctionnelles et les épaisseurs des revêtements diélectriques sont choisies afin de conférer aux matériaux des valeurs de facteur solaire inférieures à 20 % pour une transmission lumineuse de l'ordre de 40 %.

La demande WO2017/006029 décrit également un substrat revêtu d'un empilement à trois couches métalliques fonctionnelles à base d'argent. L'objectif de cette description est notamment de fournir des vitrages ayant des valeurs de facteur solaire inférieures ou égales à 34 % pour une transmission lumineuse d'au moins 65 %.

La demande WO 2019/171002 décrit également un substrat revêtu d'un empilement à trois couches métalliques fonctionnelles. L'objectif de cette description est de fournir des vitrages qui présentent une haute sélectivité, pour une valeur de TL donnée, tout en garantissant une excellente neutralité et une faible sensibilité optique.

Dans les trois cas, l'épaisseur totale du revêtement est de l'ordre de 250 à 300 nm.

Les demandes WO 2013/079400, WO 2018/165645, WO 2009/029466 et WO 2019/029466 décrivent également un substrat revêtu d'un empilement à trois couches métalliques fonctionnelles. Toutefois, ces demandes ne décrivent pas en combinaison que :
- la somme des épaisseurs physiques des quatre revêtements diélectriques (M1, M2, M3 et M4) est égale ou inférieure à 210,0 nm,
- l'épaisseur physique du deuxième revêtement diélectrique et du troisième revêtement diélectrique est inférieure à 70,0 nm,
- toutes les couches diélectriques de l'empilement ont une épaisseur inférieure à 47 nm.

Or, une ligne de production par pulvérisation cathodique assistée par magnétron est limitée en débit de verre par l'épaisseur totale de l'empilement à déposer et en particulier par l'épaisseur totale des revêtements diélectriques qui représentent la plus grande partie de l'épaisseur de l'empilement complet. Réduire cette épaisseur permet ainsi de travailler à plus grande vitesse ou sur des lignes plus petites qui nécessitent des investissements plus faibles.

Par ailleurs, même si le cout de la matière utilisée dans l'empilement est relativement faible, la réduction du cout de la matière est intéressante.

Enfin, en considérant la problématique de l'utilisation des verres revêtus d'un empilement comme calcin, on ne peut que bénéficier d'une quantité de matériaux déposée plus faible.

L'objectif de l'invention est de développer un matériau présentant de bonnes propriétés de contrôle solaire et notamment des valeurs de facteur solaire inférieures ou égales à 40 % pour une transmission lumineuse de l'ordre de 50 à 75% % tout en minimisant l'épaisseur totale de l'empilement. Selon l'invention, on cherche notamment à minimiser l'épaisseur des revêtements diélectriques sans impacter significativement les performances optiques du vitrage. La complexité des empilements comprenant trois couches fonctionnelles rend difficile la diminution de l'épaisseur des couches sans nuire aux autres propriétés de l'empilement, notamment la performance énergétique.

Le but de l'invention est donc d'améliorer la rapidité de production d'un substrat comprenant un empilement comportant au moins trois couches d'argent qui présente une haute sélectivité, tout en garantissant un aspect, notamment en réflexion extérieure, en réflexion intérieure et en transmission qui soit agréable à l'oeil. L'aspect agréable à l'œil se traduit par l'obtention de couleurs, tant de l'extérieur que de l'intérieur, qui soient neutres, dans les bleu-vert.

Le demandeur a découvert de manière surprenante qu'en modulant les épaisseurs des différentes couches fonctionnelles et des revêtements diélectriques, il est possible d'obtenir un excellent compromis entre, l'épaisseur du revêtement, et donc la vitesse de la ligne de production et les performances optiques et énergétiques du revêtement. En particulier, le demandeur a découvert que l'épaisseur des revêtements diélectriques M1 et M4 pouvait être diminuée fortement si l'épaisseur des revêtements diélectriques M2 et M3 sont de valeur proche.
L'invention a pour objet un matériau selon la revendication 1.

Le matériau est caractérisé en ce que :
- l'épaisseur physique Ep1 du premier revêtement diélectrique M1 est inférieure à 40,0 nm, de préférence inférieure à 36 nm, et de manière encore préférée comprise entre 15,0 et 32,0 nm, et/
- l'épaisseur physique Ep2 du deuxième revêtement diélectrique M2 est inférieure à 70,0 nm, de préférence inférieur à 65 nm, et
- l'épaisseur physique Ep3 du troisième revêtement diélectrique M3 est inférieure à 70,0 nm, de préférence inférieur à 65 nm, et
- l'épaisseur physique Ep4 du quatrième revêtement diélectrique M4 est inférieure à 40,0 nm, de préférence inférieure à 36,0 nm, de manière encore préférée comprise entre 15,0 et 32,0 nm.

La solution de l'invention représente un excellent compromis entre les performances optiques, thermiques, la transparence, l'aspect esthétique et la vitesse de production.

Dans le dépôt magnetron, la longueur de la ligne est fixe, le nombre de cathode est également plus ou moins fixe. Par exemple, la puissance maximale applicable sur une cathode d'un matériau comme SiAl est de l'ordre de 100kW. Cette puissance permet de déposer de l'ordre de 75nm à une vitesse de 1m/min mais seulement 15nm à 5m/min Pour un oxyde (ZnO, SnZnO), on dépose plutôt de l'ordre de 70nm à 1m/min pour une puissance maximale de 60kW. Le critère limitant la vitesse de la ligne - et donc in fine le coût du produit - est donc l'épaisseur totale de l'empilement.

Cette invention décrit donc des empilements donc l'épaisseur totale de matériaux diélectriques ne dépasse pas 210 nm, voire 190 nm et dont l'épaisseur individuelle des revêtements diélectriques ne dépasse pas 70nm, soit une réduction de près de 20% par rapport aux épaisseurs usuellement décrites.

Les caractéristiques préférées qui figurent dans la suite de la description sont applicables aussi bien au procédé selon l'invention que, le cas échéant, aux produits, c'est-à-dire aux matériaux ou aux vitrages comprenant le matériau.

Dans le matériau selon l'invention, l'épaisseur physique Ep1 du premier revêtement diélectrique M1 est en particulier inférieure à 40,0 nm, de préférence inférieure à 36,0 nm, et de manière encore préférée comprise entre 15,0 et 32,0 nm.

En particulier, l'épaisseur physique Ep4 du quatrième revêtement diélectrique M4 est inférieure à 40,0 nm, de préférence inférieure à 36,0 nm, de manière encore préférée comprise entre 15,0 et 32,0 nm.

Avantageusement, le rapport Ep3/Ep2 entre l'épaisseur physique du troisième revêtement diélectrique M3 sur l'épaisseur physique du deuxième revêtement diélectrique M2 est compris entre 0,80 et 1,15, de préférence compris entre 0,90 et 1,10, et de manière encore préférée entre 0,95 et 1,05.

Avantageusement, le rapport Ep2/Ep1 entre l'épaisseur physique du deuxième revêtement diélectrique M2 sur l'épaisseur physique du premier revêtement diélectrique M1 est supérieur à 1,70, de préférence supérieur à 1,80, et de manière encore préférée compris entre 2,0 et 4,0.

En particulier, l'épaisseur physique Ep2 du deuxième revêtement diélectrique M2 est inférieure à 66 nm, et de manière encore préférée comprise entre 50,0 et 64,0 nm.

En particulier, l'épaisseur physique Ep3 du troisième revêtement diélectrique M3 est inférieure à 66 nm, et de manière encore préférée comprise entre 50,0 et 64,0 nm.

Avantageusement, le rapport (Ep1+Ep4) / (Ep2+Ep3) entre la somme des épaisseurs physiques des revêtements diélectriques M1 et M4 sur la somme des épaisseurs physiques des revêtements diélectriques M2 et M3, soit compris entre 0,20 et 0,54, de préférence compris entre 0,25 et 0,52, et de manière encore préférée comprise entre 0,30 à 0,46.

Selon certains modes de réalisation, l'empilement peut comprendre, en outre, au moins une couche de blocage située au contact d'une couche métallique fonctionnelle choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome et le niobium telles qu'une couche de Ti, TiN, TiOx, Nb, NbN, Ni, NiN, Cr, CrN, NiCr, NiCrN.

En particulier, l'épaisseur totale de toutes les couches de blocage au contact des couches fonctionnelles est inférieure à 5,0 nm, de préférence inférieure à 3,0 nm, et de manière encore préférée comprise entre 0,5 et 2,0 nm, en incluant ces valeurs.

Les couches métalliques fonctionnelles à base d'argent (Ag1, Ag2, Ag3) ont des épaisseurs physiques appelées Ea1, Ea2, Ea3 et leur somme est préférence entre 25,0 et 45,0 nm.

Avantageusement, l'empilement comprend en outre une couche de protection, pouvant par exemple être TiZrHf ou SnZnO. Ces couches de protection permettent d'améliorer la durabilité et la stabilité de l'empilement.

Toutes les caractéristiques lumineuses présentées dans la description sont obtenues selon les principes et méthodes décrits dans la norme européenne EN 410 se rapportant à la détermination des caractéristiques lumineuses et solaires des vitrages utilisés dans le verre pour la construction.

De manière conventionnelle, les indices de réfraction sont mesurés à une longueur d'onde de 550 nm. Les facteurs de transmission lumineuse TL et de réflexion lumineuse RL sont mesurés sous l'illuminant D65 avec un champ de vision de 2°.

Sauf indication contraire, toutes les valeurs et gammes de valeurs des caractéristiques optiques et thermiques sont données pour un vitrage double constitué d'un substrat de type verre sodo-calcique ordinaire de 6 mm portant l'empilement de couches minces, d'un espace intercalaire de 16 mm rempli d'argon à raison de 90 % et d'air à raison de 10 % et d'un autre substrat de type verre sodo-calcique, non-revêtu, d'une épaisseur de 4 mm. Le substrat revêtu est placé de sorte que l'empilement de couches minces se trouve en face 2 du vitrage. La réflexion extérieure (Rext.) est observée du côté du substrat comprenant l'empilement, tandis que la réflexion observée du côté du substrat ne comprenant pas l'empilement est désignée comme la réflexion intérieure. La transmission lumineuse (TL) des substrats de type verre sodo-calcique ordinaire, sans empilement est supérieure à 89 %, de préférence de 90 %.

Sauf mention contraire, les épaisseurs évoquées dans le présent document sans autres précisions sont des épaisseurs physiques, réelles ou géométriques dénommées Ep et sont exprimées en nanomètres (et non pas des épaisseurs optiques). L'épaisseur optique Eo est définie comme l'épaisseur physique de la couche considérée multipliée par son indice de réfraction à la longueur d'onde de 550 nm : Eo = n*Ep.

**Dans toute** la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Au sens de la présente invention, les qualifications « première », « deuxième », « troisième » et « quatrième » pour les couches fonctionnelles ou les revêtements diélectriques sont définies en partant du substrat porteur de l'empilement et en se référant aux couches ou revêtements de même fonction. Par exemple, la couche fonctionnelle la plus proche du substrat est la première couche fonctionnelle, la suivante en s'éloignant du substrat est la deuxième couche fonctionnelle, etc.

L'invention concerne également un vitrage comprenant un matériau selon l'invention. De manière conventionnelle, les faces d'un vitrage sont désignées à partir de l'extérieur du bâtiment et en numérotant les faces des substrats de l'extérieur vers l'intérieur de l'habitacle ou du local qu'il équipe. Cela signifie que la lumière solaire incidente traverse les faces dans l'ordre croissant de leur numéro.

De préférence, toutes les couches de l'empilement sont déposées par pulvérisation cathodique assistée par un champ magnétique.

L'invention concerne également le procédé d'obtention d'un matériau selon l'invention, dans lequel on dépose les couches de l'empilement par pulvérisation cathodique magnétron.

Les couches fonctionnelles métalliques à base d'argent comprennent au moins 95,0 %, de préférence au moins 96,5 % et mieux au moins 98,0 % en masse d'argent par rapport à la masse de la couche fonctionnelle.

Selon des modes de réalisation avantageux de l'invention, les couches métalliques fonctionnelles et les revêtements diélectriques satisfont une ou plusieurs des conditions suivantes :
- l'épaisseur de la première couche métallique fonctionnelle est comprise entre 6 et 14 nm, entre 7 et 12 nm ou entre 8 et 10 nm, et/ou
- l'épaisseur de la seconde couche métallique fonctionnelle est comprise entre 8 et 14 nm, entre 9 et 12 nm, et/ou
- l'épaisseur de la troisième couche métallique fonctionnelle est comprise entre 6 et 14 nm, entre 7 et 12 nm ou entre 8 et 10 nm, et/ou
- toutes les couches métalliques fonctionnelles à base d'argent ont une épaisseur inférieure ou égale à 12 nm, et/ou
- l'épaisseur totale des couches métalliques fonctionnelles est comprise entre 20 et 50 nm ou entre 20 et 40 nm, de préférence entre 25 et 35 nm en incluant ces valeurs.

Selon un mode de réalisation particulièrement avantageux, l'empilement présente une structure en cloche ce qui correspond à une répartition symétrique en épaisseur des revêtements diélectriques et des couches fonctionnelles autour de la seconde couche fonctionnelle. Cette répartition contribue à l'obtention des propriétés avantageuses avec des épaisseurs réduites.

Selon ce mode de réalisation avantageux de l'invention, les couches métalliques fonctionnelles et les revêtements diélectriques satisfont une ou plusieurs des conditions suivantes :
- le rapport de l'épaisseur de la deuxième couche métallique fonctionnelle sur l'épaisseur de la première couche métallique fonctionnelle Ag3/Ag1 est, compris entre 0,80 et 1,20 en incluant ces valeurs, entre 0,85 et 1,10 ou entre 0,90 et 1,05 en incluant ces valeurs, et/ou
- le rapport de l'épaisseur de la deuxième couche métallique fonctionnelle sur l'épaisseur de la troisième couche métallique fonctionnelle Ag2/Ag3 est compris entre 0,90 et 1,50, en incluant ces valeurs, entre 1,00 et 1,40 ou entre 1,10 et 1,40 en incluant ces valeurs, et/ou
- le rapport de l'épaisseur de la deuxième couche métallique fonctionnelle sur l'épaisseur de la première couche métallique fonctionnelle Ag2/Ag1 est compris entre 1,00 et 1,40 ou entre 1,10 et 1,40, en incluant ces valeurs, et/ou
- le rapport de l'épaisseur du troisième revêtement diélectrique sur l'épaisseur du deuxième revêtement diélectrique est compris entre 0,80 et 1,20 en incluant ces valeurs, entre 0,85 et 1,15 ou entre 0,90 et 1,10 ou entre 0,95 et 1,05 en incluant ces valeurs, et/ou
- le rapport de l'épaisseur du deuxième revêtement diélectrique sur l'épaisseur du premier revêtement diélectrique est compris entre 1,40 et 4,00 ou entre 1,50 et 3,00, ou entre 1,60 et 3,00 en incluant ces valeurs, et/ou
- le rapport de l'épaisseur du deuxième revêtement diélectrique sur l'épaisseur du quatrième revêtement diélectrique est compris entre 1,40 et 4,00 ou entre 2,00 et 4,00, en incluant ces valeurs.

L'empilement peut comprendre en outre au moins une couche de blocage située au contact d'une couche fonctionnelle.

Les couches de blocage ont traditionnellement pour fonction de protéger les couches fonctionnelles d'une éventuelle dégradation lors du dépôt du revêtement antireflet supérieur et lors d'un éventuel traitement thermique à haute température, du type recuit, bombage et/ou trempe.

Les couches de blocage sont choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome et le niobium telles que Ti, TiN, TiOx, Nb, NbN, Ni, NiN, Cr, CrN, NiCr, NiCrN. Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Selon des modes de réalisation avantageux de l'invention, la ou les couches de blocage satisfont une ou plusieurs des conditions suivantes :
- chaque couche métallique fonctionnelle est au contact d'au moins une couche de blocage choisie parmi une sous-couche de blocage et une surcouche de blocage, et/ou
- chaque couche métallique fonctionnelle est au contact d'une surcouche de blocage.

De préférence, chaque revêtement diélectrique est constitué uniquement d'une ou de plusieurs couches diélectriques. De préférence, il n'y a donc pas de couche absorbante dans les revêtements diélectriques afin de ne pas diminuer la transmission lumineuse.

Les empilements de l'invention peuvent comprendre des couches diélectriques à fonction barrière. On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les matériaux constitutifs de la couche diélectrique à fonction barrière ne doivent donc pas subir de modification chimique ou structurelle à haute température qui entraînerait une modification de leurs propriétés optiques. La ou les couches à fonction barrière sont de préférence également choisies en un matériau apte à faire barrière au matériau constitutif de la couche fonctionnelle. Les couches diélectriques à fonction barrière permettent donc à l'empilement de subir sans évolution optique trop significative des traitements thermiques du type recuit, trempe ou bombage.

**Les empilements** de l'invention peuvent comprendre des couches diélectriques à fonction stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La ou les couches diélectriques à fonction stabilisante peuvent se trouver directement au contact d'une couche fonctionnelle ou séparées par une couche de blocage.

De préférence, la dernière couche diélectrique de chaque revêtement diélectrique situé en-dessous d'une couche fonctionnelle est une couche diélectrique à fonction stabilisante. En effet, il est avantageux d'avoir une couche à fonction stabilisante, par exemple, à base d'oxyde de zinc en-dessous d'une couche fonctionnelle, car elle facilite l'adhésion et la cristallisation de la couche fonctionnelle à base d'argent et augmente sa qualité et sa stabilité à haute température.

Il est également avantageux d'avoir une couche fonction stabilisante, par exemple, à base d'oxyde de zinc au-dessus d'une couche fonctionnelle, pour en augmenter l'adhésion et s'opposer de manière optimale à la diffusion du côté de l'empilement opposé au substrat.

La ou les couches diélectriques à fonction stabilisantes peuvent donc se trouver au-dessus et/ou en dessous d'au moins une couche fonctionnelle ou de chaque couche fonctionnelle, soit directement à son contact ou soit séparées par une couche de blocage.

Avantageusement, chaque couche diélectrique à fonction barrière est séparée d'une couche fonctionnelle par au moins une couche diélectrique à fonction stabilisante.

Cette couche diélectrique à fonction stabilisante peut avoir une épaisseur d'au moins 4,0 nm, notamment une épaisseur comprise entre 4,0 et ,0 nm et mieux de 8,0 à 10,0 nm.

L'empilement de couches minces peut éventuellement comprendre une couche de lissage. On entend par couches de lissage, une couche dont la fonction est de favoriser la croissance de la couche stabilisante selon une orientation cristallographique préférentielle, laquelle favorise la cristallisation de la couche d'argent par des phénomènes d'épitaxie. La couche de lissage est située en-dessous et de préférence au-contact d'une couche stabilisante.

La couche de lissage à base d'oxyde mixte peut être qualifiée de « non cristallisée » dans le sens où elle peut être complètement amorphe ou partiellement amorphe et ainsi partiellement cristallisée, mais qu'elle ne peut pas être complètement cristallisée, sur toute son épaisseur. Elle ne peut être de nature métallique car elle est à base d'oxyde mixte (un oxyde mixte est un oxyde d'au moins deux éléments).

L'indice de la couche de lissage est, de préférence, inférieur à 2,15. Par ailleurs, la couche de lissage présente de préférence une épaisseur entre 0,1 et 30,0 nm et de préférence encore comprise entre 0,2 et 10,0 nm.

L'empilement de couches minces peut éventuellement comprendre une couche de protection. La couche de protection est de préférence la dernière couche de l'empilement, c'est-à-dire la couche la plus éloignée du substrat revêtu de l'empilement. Ces couches supérieures de protection sont considérées comme comprises dans le quatrième revêtement diélectrique. Ces couches ont en général une épaisseur comprise entre 2,0 et 10,0 nm, de préférence 2,0 et 5,0 nm. Cette couche de protection peut être choisie parmi une couche de titane, de zirconium, d'hafnium, de zinc et/ou d'étain, ce ou ces métaux étant sous forme métallique, oxydée ou nitrurée.

La couche de protection peut par exemple être choisie parmi une couche d'oxyde de titane, une couche d'oxyde de zinc et d'étain ou une couche d'oxyde de titane et de zirconium.

La couche de protection est comprise dans le dernier revêtement diélectrique, c'est à dire dans le revêtement le plus éloigné du substrat. Dans le cas d'un empilement à trois couches d'argent, la couche de protection appartient au quatrième revêtement diélectrique M4. Cela signifie que l'épaisseur de la couche de protection est prise en considération dans la détermination de l'épaisseur physique Ep4 du quatrième revêtement diélectrique M4.

Un mode de réalisation concerne un substrat revêtu d'un empilement défini en partant du substrat transparent comprenant :
- un premier revêtement diélectrique comprenant au moins une couche haut indice, éventuellement une couche à fonction barrière, une couche diélectrique à fonction stabilisante,
- éventuellement une couche de blocage,
- une première couche fonctionnelle,
- éventuellement une couche de blocage,
- un deuxième revêtement diélectrique comprenant au moins une couche diélectrique à fonction stabilisante inférieure, éventuellement une couche à fonction barrière, une couche diélectrique haut indice, éventuellement une couche à fonction de lissage, une couche diélectrique à fonction stabilisante supérieure,
- éventuellement une couche de blocage,
- une deuxième couche fonctionnelle,
- éventuellement une couche de blocage,
- un troisième revêtement diélectrique comprenant au moins une couche diélectrique à fonction stabilisante inférieure, éventuellement une couche à fonction barrière, une couche diélectrique haut indice, éventuellement une couche à fonction de lissage, une couche diélectrique à fonction stabilisante supérieure,
- éventuellement une couche de blocage,
- une troisième couche fonctionnelle,
- éventuellement une couche de blocage,
- un quatrième revêtement diélectrique comprenant au moins une couche diélectrique à fonction stabilisante, éventuellement une couche à fonction barrière, une couche diélectrique haut indice et éventuellement une couche de protection.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le matériau, c'est-à-dire le substrat revêtu de l'empilement, peut subir un traitement thermique à température élevée tel qu'un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu de l'empilement peut donc être bombé et/ou trempé.

L'empilement est de préférence positionné dans le vitrage de sorte que la lumière incidente provenant de l'extérieur traverse le premier revêtement diélectrique avant de traverser la première couche métallique fonctionnelle. L'empilement n'est pas déposé sur la face du substrat définissant la paroi extérieure du vitrage mais sur la face intérieure de ce substrat. L'empilement est donc avantageusement positionné en face 2, la face 1 du vitrage étant la face la plus à l'extérieur du vitrage, comme habituellement.

Le vitrage de l'invention peut être sous forme de vitrage monolithique, feuilleté ou multiple, en particulier double vitrage ou triple vitrage. Le vitrage de l'invention est de préférence un vitrage multiple. Un vitrage multiple comprend au moins un premier et un second substrats transparents parallèles et séparés par une lame de gaz dont au moins l'un des substrats est revêtu d'un empilement de couches minces. Les matériaux selon l'invention conviennent tout particulièrement lorsqu'ils sont utilisés dans des double-vitrages à isolation thermique renforcée (ITR).

Dans le cas d'un vitrage monolithique ou multiple, l'empilement est de préférence déposé en face 2, c'est-à-dire qu'il se trouve sur le substrat définissant la paroi extérieure du vitrage et plus précisément sur la face intérieure de ce substrat.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

De la même manière, un triple vitrage comporte 6 faces, la face 1 est à l'extérieur du bâtiment (paroi extérieure du vitrage), la face 6 à l'intérieur du bâtiment (paroi intérieure du vitrage) et les faces 2 à 5 sont à l'intérieur du triple vitrage.

Un vitrage feuilleté comporte au moins une structure de type premier substrat / feuille(s) / deuxième substrat. L'empilement de couches minces est positionné sur l'une au moins des faces d'un des substrats. L'empilement peut être sur la face du deuxième substrat non au contact de la feuille, de préférence polymère. Ce mode de réalisation est avantageux lorsque le vitrage feuilleté est monté en double vitrage avec un troisième substrat.

Le vitrage selon l'invention, utilisé comme vitrage monolithique ou dans un vitrage multiple de type double-vitrage, présente des couleurs en réflexion extérieure neutres, agréables et douces, dans la gamme des bleus ou bleus-verts (valeurs de longueur d'onde dominante de l'ordre de 470 à 500 nanomètres). De plus, cet aspect visuel reste quasiment inchangé quel que soit l'angle d'incidence avec lequel le vitrage est observé (incidence normale et sous angle). Cela signifie qu'un observateur n'a pas l'impression d'une inhomogénéité significative de teinte ou d'aspect.

Par « couleur dans le bleu-vert » au sens de la présente invention, il faut comprendre que dans le système de mesure de couleur L*a*b*, a* est compris entre - 10,0 et 0,0, de préférence entre -5,0 et 0,0 et b* est compris entre -10,0 et 0,0, de préférence entre -5,0 et 0,0.

L'invention concerne également :
- le vitrage comprenant au moins un matériau selon l'invention,
- l'utilisation d'un vitrage selon l'invention en tant que vitrage de contrôle solaire pour le bâtiment.

Le vitrage selon l'invention comprend au moins un matériau comme décrit ci-dessus, ledit vitrage étant de préférence sous forme de vitrage feuilleté ou multiple, en particulier sous forme de double vitrage ou de triple vitrage.

Selon des modes de réalisation avantageux, le vitrage de l'invention sous forme d'un double vitrage comprenant l'empilement positionné en face 2 permet d'atteindre notamment les performances suivantes :
- un facteur solaire g inférieur ou égal à 44,0 %, de préférence inférieur ou égal à 40,0 %, voire inférieur ou égal à 38,0 % et/ou
- une transmission lumineuse, comprise entre 50 % et 75 %, voire comprise entre 55 et 74 % et/ou
- une sélectivité élevée, d'au moins 1,70, de préférence d'au moins 1,80 et/ou
- une réflexion lumineuse côté extérieur inférieure ou égale à 20 %, de préférence comprise entre 10,0 et 18,0%, et/ou
- une réflexion lumineuse côté intérieur inférieure ou égale à 20 %, de préférence inférieur ou égale à 18,0%, voire comprise entre 10,0 et 16,0 %, et/ou
- des couleurs neutres en réflexion extérieure,
- des valeurs de a* comprise, par ordre de préférence croissant, entre -8 et +5, entre
- 6 et +3, entre -3 et +2, entre -2 et + 1;
- des valeurs de b* comprise, par ordre de préférence croissant, entre -5 et +5, entre - 4 et +4, entre -3 et +3, entre -2 et +2, entre -1 et +1.

Les détails et caractéristiques avantageuses de l'invention ressortent des exemples non limitatifs suivants.

### Exemples

### I. Préparation des substrats

Des empilements de couches minces définis ci-après sont déposés sur des substrats en verre sodo-calcique clair d'une épaisseur de 6 mm.

Les caractéristiques optiques sont mesurées sur des matériaux sous forme de double vitrage de structure 6/16/4 : verre de 6 mm / espace intercalaire de 16 mm rempli d'argon à 90 % / verre de 4 mm, l'empilement étant positionné en face 2 (la face 1 du vitrage étant la face la plus à l'extérieur du vitrage, comme habituellement).

Les six exemples selon l'invention sont comparés à deux exemples comparatifs de structure très similaires. L'exemple comparatif 1 est l'exemple 1 de la demande WO 2019/171002 et l'exemple comparatif 2 est l'exemple 2 de la demande WO2017/006027.

Dans les exemples ci-après :
- les couches fonctionnelles sont des couches d'argent (Ag),
- les couches de blocage sont des couches de NiCr ou Ti,
- les revêtements diélectriques comportent :
   - une couche de nitrure de silicium, dopé à l'aluminium (Si₃N₄ : Al),
   - des couches stabilisantes en oxyde de zinc (ZnO), et
   - éventuellement des couches de lissages à base d'oxyde mixte de zinc et d'étain (SnZnOx).

Les conditions de dépôt des couches, qui ont été déposées par pulvérisation (pulvérisation dite « cathodique magnétron »), sont résumées dans le tableau 1.

**[Table1]**

| **Tab 1** | Cible employée | Pression de dépôt | Gaz | n à 550 nm |
|---|---|---|---|---|
| SiN | Si:Al à 92:8 (% en poids) | 3,2.10⁻³ mbar | Ar /(Ar + N₂) à 55 % | 2,07 |
| ZnO | Zn:Al à 98:2 (% en poids) | 1,8.10⁻³ mbar | Ar /(Ar + O₂) à 63 % | 1,95 |
| SnZnO | Sn-Zn à 50-50 (% en poids) | 3,1.10⁻³ mbar | Ar /(Ar + O₂) à 66 % | 2,04 |
| NiCr | Ni (80% at.) ; Cr (20% at.) | 2-3.10⁻³ mbar | Ar à 100 % | 2,50 |
| Ag | Ag | 3.10⁻³ mbar | Ar à 100 % | - |

| | | | | |
|---|---|---|---|---|
| At. = atomique | | | | |

Le tableau 2 liste les matériaux et les épaisseurs physiques en nanomètres (sauf autre indication) de chaque couche ou revêtement qui constitue les empilements en fonction de leur position vis-à-vis du substrat porteur de l'empilement (dernière ligne en bas du tableau).

Chaque revêtement diélectrique M1, M2, M3 en-dessous d'une couche fonctionnelle Ag1, Ag2, Ag3 comporte une dernière couche à base d'oxyde de zinc cristallisé, et qui est au contact de la couche fonctionnelle Ag1, Ag2, Ag3 déposée juste au-dessus.

Chaque revêtement diélectrique M2, M3, M4 au-dessus d'une couche fonctionnelle Ag1, Ag2, Ag3 comporte une première couche stabilisante à base d'oxyde de zinc cristallisé, et qui est au contact de la couche fonctionnelle Ag1, Ag2, Ag3 déposée juste au-dessus.

Selon certains modes de réalisation, certains revêtements diélectriques pourraient encore comporter une couche diélectrique haut indice, à base de nitrure de silicium et de zirconium ou d'oxyde de titane. Cependant, selon un mode de réalisation préféré, les revêtements diélectriques ne comportent pas de couches à haut indice. Les indices des couches constituants les revêtements diélectriques sont de préférence inférieurs à 2,18, de manière encore préférée compris entre 1,80 et 2,15, voire entre 1,85 et 2,10.

Les revêtements diélectriques M1, M2, M3, M4 comportent une couche diélectrique à fonction barrière à base de nitrure de silicium, dopé à l'aluminium appelée ici Si3N4 ou SiN.

Les empilements comportent une couche de protection, qui peut être TiZrHf ou SnZnO..

**[Table 2]**

| **Tab. 2** | **Inv.1** | **Inv.2** | **Inv.3** | **Inv.4** | **Inv.5** | **Inv.6** | **Comp.1** | **Comp.2** |
|---|---|---|---|---|---|---|---|---|
| Revêtement diélectrique M4 | | | | | | | | |
| - Couche de protection | 2,0 | 2,0 | 2,0 | 2,0 | 2,0 | 2,0 | - | 2,0 |
| - Si3N4 | 8,6 | 16,9 | 10,3 | 27,8 | 8,0 | 14,8 | 29,7 | 31,1 |
| - ZnO | 8,0 | 8,0 | 8,0 | 8,0 | 8,0 | 8,0 | 8,0 | 8,0 |
| Couche blocage NiCr/Ti | 0,2 | 0,4 | 0,5 | 0,5 | 0,0 | 0,0 | 0,3 | 1,1 |
| Couche fonctionnelle Ag3 | 8,5 | 8,1 | 15,2 | 8,2 | 8,2 | 8,1 | 15,0 | 17,2 |
| Couche blocage | 0,0 | 0,0 | 0,0 | 0,0 | 0,0 | 0,0 | 0,0 | 0,5 |
| Revêtement diélectrique M3 | | | | | | | | |
| - ZnO | 8,0 | 8,0 | 8,0 | 8,0 | 8,0 | 8,0 | 8,0 | 8,0 |
| - SnZnO | 0,0 | 0,0 | 0,0 | 0,0 | 0,0 | 0,0 | 12,0 | |
| - Si3N4 | 44,6 | 45 | 45 | 45 | 45 | 40 | 51,8 | 76,6 |
| - ZnO | 8,0 | 8,0 | 8,0 | 8,0 | 8,0 | 8,0 | 8,0 | 8,0 |
| Couche blocage NiCr/Ti | 0,2 | 0,4 | 0,5 | 0,5 | 0,0 | 0,0 | 0,2 | 0,5 |
| Couche fonctionnelle Ag2 | 9,4 | 10,8 | 9,9 | 8,5 | 11,0 | 9,2 | 12,3 | 17,1 |
| Couche blocage NiCr | 0,0 | 0,0 | 0,0 | 0,0 | 0,0 | 0,0 | 0,0 | 1,8 |
| Revêtement diélectrique M2 | | | | | | | | |
| - ZnO | 8,0 | 8,0 | 8,0 | 8,0 | 8,0 | 8,0 | 8,0 | 8,0 |
| - Si3N4 | 42,2 | 45,0 | 45,0 | 45,0 | 45,0 | 40,0 | 33,9 | 55,5 |
| - ZnO | 8,0 | 8,0 | 8,0 | 8,0 | 8,0 | 8,0 | 8,0 | 8,0 |
| Couche blocage NiCr | 0,2 | 0,4 | 0,5 | 0,5 | 0,0 | 0,0 | 0,3 | 0,5 |
| Couche fonctionnelle Ag1 | 8,5 | 8,6 | 8,5 | 13,7 | 9,6 | 8,5 | 11,3 | 10,1 |
| Couche blocage NiCr | 0,2 | 0,4 | 0,5 | 0,5 | 0,0 | 0,0 | 0,3 | 0,5 |
| Revêtement diélectrique M1 | | | | | | | | |
| - ZnO | 8,0 | 8,0 | 8,0 | 8,0 | 8,0 | 8,0 | 8,0 | 8,0 |
| - Si3N4 | 19,6 | 27,5 | 19,4 | 10,0 | 13,6 | 16,0 | 37,3 | 40,9 |
| Substrat verre (mm) | 6,0 | 6,0 | 6,0 | 6,0 | 6,0 | 6,0 | 6,0 | 6,0 |

Le tableau 3 ci-dessous résume les caractéristiques liées aux épaisseurs des revêtements diélectriques.

**[Table 3]**

| **Tab. 3** | **Inv.1** | **Inv.2** | **Inv.3** | **Inv.4** | **Inv.5** | **Inv.6** | **Comp.1** | **Comp.2** |
|---|---|---|---|---|---|---|---|---|
| Tot M1 | 27,6 | 35,5 | 27,4 | 18,0 | 21,6 | 24,0 | 45,3 | 44,4 |
| Tot M2 | 58,2 | 61,0 | 61,0 | 61,0 | 61,0 | 56,0 | 49,9 | 71,5 |
| Tot M3 | 60,6 | 61,0 | 61,0 | 61,0 | 61,0 | 56,0 | 79,8 | 92,6 |
| Tot M4 | 18,6 | 26,9 | 20,3 | 37,8 | 18,0 | 24,8 | 37,7 | 41,1 |
| M3/M2 | 1,0 | 1,0 | 1,0 | 1,0 | 1,0 | 1,0 | 1,6 | 1,3 |
| M3/M1 | 2,2 | 1,7 | 2,2 | 3,4 | 2,8 | 2,3 | 1,8 | 1,9 |
| M2/M4 | 3,1 | 2,3 | 3,0 | 1,6 | 3,4 | 2,3 | 1,3 | 1,7 |
| M2/M1 | 2,1 | 1,7 | 2,2 | 3,4 | 2,8 | 2,3 | 1,1 | 1,5 |
| (M1+M4)/(M2+M3) | 0,39 | 0,51 | 0,39 | 0,46 | 0,32 | 0,44 | 0,64 | 0,52 |
| Tot M1+M2+M3+M4 | 165 | 184,4 | 169,7 | 177,8 | 161,6 | 160,8 | 212,7 | 249,1 |
| Ag2/Ag3 | 1,11 | 1,33 | 0,65 | 1,04 | 1,34 | 1,14 | 0,82 | 0,99 |
| Ag2/Ag1 | 1,11 | 1,26 | 1,16 | 0,62 | 1,15 | 1,08 | 1,09 | 1,69 |
| Ag3/Ag1 | 1,00 | 0,94 | 1,79 | 0,60 | 0,85 | 0,95 | 1,33 | 1,70 |
| Ag1+Ag2+Ag3 | 26,4 | 27,5 | 33,6 | 30,4 | 28,8 | 25,8 | 38,6 | 44,4 |

### II. Performances « contrôle solaire »

Le tableau 4 liste les performances énergétiques et colorimétriques obtenues lorsque les vitrages font parties de double vitrage de structure 6/16/4, telle que décrite ci-dessus.

**[Table 4]**

| **Tab. 4** | **Inv.1** | **Inv.2** | **Inv.3** | **Inv.4** | **Inv. 5** | **Inv.6** | **Comp. 1** | **Comp. 2** |
|---|---|---|---|---|---|---|---|---|
| g (%) | 38,4 | 34,4 | 33,3 | 27,6 | 37,8 | 40,5 | 28 | 19 |
| TL (%) | 69,6 | 61,8 | 60,3 | 55,1 | 71,3 | 73,4 | 56 | 40 |
| S | 1,8 | 1,8 | 1,8 | 2,0 | 1,9 | 1,8 | 2,0 | 2,1 |
| T:a* | -3,3 | -4,4 | -4,5 | -7,2 | -4,3 | -4,4 | -3 | -5,0 |
| T:b* | 1,6 | -2,2 | -1,3 | -1,8 | 1,7 | 1,5 | -1 | 0,0 |
| RLext (%) | 13,4 | 12,2 | 11,3 | 18,4 | 14,5 | 13,2 | 15 | 18 |
| RLext a* | -5,9 | 0,5 | -0,9 | -4,5 | -2,1 | -0,9 | -2 | -2,7 |
| RLext b* | -3,0 | -1,5 | -2,3 | -2,9 | -3,0 | -2,4 | -2 | -7,0 |
| RL int (%) | 15,4 | 15,2 | 14,7 | 15,5 | 15,7 | 14,0 | 18 | 21 |

Selon l'invention, il est possible de réaliser un vitrage comprenant un empilement à trois couches fonctionnelles métalliques avec un rendement de production amélioré et qui présente une transmission lumineuse comprise entre 55 et 73 %, une sélectivité élevée, une réflexion lumineuse faible et un facteur solaire faible. Les vitrages selon l'invention présentent à la fois un facteur solaire inférieur ou égal à 40 %, voire inférieur à 35% pour certains cas et une sélectivité supérieure à 1,8. Ces vitrages présentent en plus une réflexion extérieure inférieure à 20 %, voire inférieure à 15% pour la plupart des exemples.

Les exemples selon l'invention présentent tous une coloration neutre ou dans la gamme des bleus ou bleus-verts, en transmission et en réflexion.

La solution proposée permet donc d'atteindre les performances optiques et énergétiques souhaitées tout en diminuant l'épaisseur du revêtement de l'ordre de 28% en moyenne.

## Revendications

1. Matériau comprenant un substrat transparent revêtu sur une face d'un empilement de couches minces comportant successivement à partir de ladite face une alternance :
- de trois couches métalliques fonctionnelles à base d'argent dénommées en partant du substrat première couche fonctionnelle Ag1, deuxième couche fonctionnelle Ag2 et troisième couche fonctionnelle Ag3, et
- de quatre revêtements diélectriques dénommés en partant de ladite face du substrat M1, M2, M3 et M4, d'épaisseurs physiques respectivement Ep1, Ep2, Ep3, Ep4, chaque revêtement diélectrique comportant une couche diélectrique ou un ensemble de couches diélectriques,
de manière à ce que chaque couche métallique fonctionnelle soit disposée entre deux revêtements diélectriques,
ledit matériau étant **caractérisé en ce que** la somme ( Ep1 + Ep2 + Ep3 + Ep4 ) des épaisseurs physiques des quatre revêtements diélectriques (M1, M2, M3 et M4) est égale ou inférieure à 210,0 nm, et de préférence comprise entre 130,0 et 200,0 nm, et de manière encore préférée comprise entre 150,0 et 190,0 nm,
l'épaisseur physique Ep1 du premier revêtement diélectrique M1 est inférieure à 40 nm, l'épaisseur physique Ep4 du quatrième revêtement diélectrique M4 est inférieure à 40,0 nm,
l'épaisseur physique Ep2 du deuxième revêtement diélectrique M2 est inférieure à 70,0 nm,
l'épaisseur physique Ep3 du troisième revêtement diélectrique M3 est inférieure à 70,0 nm,
toutes les couches diélectriques de l'empilement ont une épaisseur inférieure à 47 nm, les couches métalliques fonctionnelles à base d'argent (Ag1, Ag2, Ag3) ont des épaisseurs physiques (Ea1, Ea2, Ea3) et leur somme est comprise entre 20,0 et 45,0 nm,
le rapport de l'épaisseur de la deuxième couche métallique fonctionnelle sur l'épaisseur de la première couche métallique fonctionnelle Ag2/Ag1 est compris entre 0,90 et 1,50, en incluant ces valeurs.

2. Matériau selon la revendication 1, dans lequel l'épaisseur physique Ep1 du premier revêtement diélectrique M1 est inférieure à 36 nm, et de manière encore préférée comprise entre 15,0 et 32,0 nm.

3. Matériau selon la revendication 1 ou 2, dans lequel l'épaisseur physique Ep4 du quatrième revêtement diélectrique M4 est inférieure à 36,0 nm, de manière encore préférée comprise entre 15,0 et 32,0 nm.

4. Matériau selon l'une quelconque des revendications précédentes **caractérisé en ce que** l'épaisseur physique Ep2 du deuxième revêtement diélectrique M2 est inférieure à 65 nm

5. Matériau selon l'une quelconque des revendications précédentes, dans lequel l'épaisseur physique Ep3 du troisième revêtement diélectrique M3 est inférieure à 66,0 nm, et de manière encore préférée comprise entre 50,0 et 64,0 nm.

6. Matériau selon l'une quelconque des revendications précédentes, dans lequel le rapport Ep3/Ep2 entre l'épaisseur physique du troisième revêtement diélectrique M3 sur l'épaisseur physique du deuxième revêtement diélectrique M2 est compris entre 0,80 et 1,15, de préférence compris entre 0,90 et 1,10, et de manière encore préférée entre 0,95 et 1,05.

7. Matériau selon l'une quelconque des revendications précédentes, dans lequel le rapport Ep2/Ep1 entre l'épaisseur physique du deuxième revêtement diélectrique M2 sur l'épaisseur physique du premier revêtement diélectrique M1 est supérieur à 1,70, de préférence supérieur à 1,80, et de manière encore préférée compris entre 2,0 et 4,0.

8. Matériau selon l'une quelconque des revendications précédentes, dans lequel le rapport (Ep1+Ep4) / (Ep2+Ep3) entre la somme des épaisseurs physiques des revêtements diélectriques M1 et M4 sur la somme des épaisseurs physiques des revêtements diélectriques M2 et M3, soit compris entre 0,20 et 0,54, de préférence compris entre 0,25 et 0,52, et de manière encore préférée comprise entre 0,30 à 0,46.

9. Matériau selon l'une quelconque des revendications précédentes, dans lequel l'empilement comprend en outre au moins une couche de blocage située au contact d'une couche métallique fonctionnelle choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome et le niobium telles qu'une couche de Ti, TiN, TiOx, Nb, NbN, Ni, NiN, Cr, CrN, NiCr, NiCrN.

10. Matériau selon la revendication précédente, dans lequel l'épaisseur totale de toutes les couches de blocage au contact des couches fonctionnelles est inférieure à 5,0 nm, de préférence inférieure à 3,0 nm, et de manière encore préférée comprise entre 0,5 et 2,0 nm, en incluant ces valeurs.

11. Matériau selon l'une quelconque des revendications précédentes, dans lequel les couches métalliques fonctionnelles à base d'argent (Ag1, Ag2, Ag3) ont des épaisseurs physiques (Ea1, Ea2, Ea3) et leur somme est comprise entre 25,0 et 45,0 nm.

12. Matériau selon l'une quelconque des revendications précédentes, dans lequel l'empilement comprend en outre une couche de protection.

13. Vitrage comprenant au moins un matériau selon l'une quelconque des revendications 1 à 12, ledit vitrage étant de préférence sous forme de vitrage feuilleté ou multiple, en particulier sous forme de double vitrage ou de triple vitrage.

14. Vitrage selon la revendication précédente, présentant lorsqu'il est sous forme de double vitrage, une transmission lumineuse TL comprises entre 50% et 75%.

15. Vitrage selon l'une quelconque des revendications 13 et 14, présentant lorsqu'il est sous forme de double vitrage avec l'empilement positionné en face 2, un facteur solaire g inférieur à 44%.

16. Vitrage selon l'une quelconque des revendications 13 à 15, présentant lorsqu'il est sous forme de double vitrage, avec l'empilement positionné en face 2, une sélectivité supérieure à 1,70.

17. Vitrage selon l'une quelconque des revendications 13 à 16, présentant lorsqu'il est sous forme de double vitrage avec l'empilement positionné en face 2, les caractéristiques colorimétriques en réflexion extérieure, en réflexion intérieure ou en transmission définies par :
- des valeurs de a* comprise entre -8 et +5,
- des valeurs de b* comprise, entre -5 et +5.

## Patentansprüche

1. Material, umfassend ein transparentes Substrat, das auf einer Fläche mit einer Stapelung von dünnen Schichten beschichtet ist, die von der Fläche aus einen Wechsel von Folgendem nacheinander vorweist:
- drei funktionellen Metallschichten auf Silberbasis, die beginnend mit dem Substrat als erste funktionelle Schicht Ag1, zweite funktionelle Schicht Ag2 und dritte funktionelle Schicht Ag3 bezeichnet werden, und
- vier dielektrische Beschichtungen, die beginnend mit der Fläche des Substrats als M1, M2, M3 und M4 mit jeweiligen physikalischen Dicken Ep1, Ep2, Ep3, Ep4, bezeichnet werden, wobei jede dielektrische Beschichtung eine dielektrische Schicht oder eine Menge von dielektrischen Schichten vorweist,
sodass jede funktionelle Metallschicht zwischen zwei dielektrischen Beschichtungen angeordnet ist,
wobei das Material **dadurch gekennzeichnet ist, dass** die Summe (Ep1 + Ep2 + Ep3 + Ep4) der physikalischen Dicken der vier dielektrischen Beschichtungen (M1, M2, M3 und M4) gleich oder kleiner als 210,0 nm ist, vorzugsweise zwischen 130,0 und 200,0 nm liegt und noch bevorzugter zwischen 150,0 und 190,0 nm liegt,
wobei die physikalische Dicke Ep1 der ersten dielektrischen Beschichtung M1 kleiner als 40 nm ist, die physikalische Dicke Ep4 der vierten dielektrischen Beschichtung M4 kleiner als 40,0 nm ist,
wobei die physikalische Dicke Ep2 der zweiten dielektrischen Beschichtung M2 kleiner als 70,0 nm ist,
die physikalische Dicke Ep3 der dritten dielektrischen Beschichtung M3 kleiner als 70,0 nm ist,
wobei alle dielektrischen Schichten der Stapelung eine Dicke von kleiner als 47 nm aufweisen, die funktionellen Metallschichten auf Silberbasis (Ag1, Ag2, Ag3) physikalische Dicken (Ea1, Ea2, Ea3) haben und ihre Summe zwischen 20,0 und 45,0 nm liegt,
wobei das Verhältnis der Dicke der zweiten funktionellen Metallschicht zu der Dicke der ersten funktionellen Metallschicht Ag2/Ag1 zwischen 0,90 und 1,50, einschließlich dieser Werte, liegt.

2. Material nach Anspruch 1, wobei die physikalische Dicke Ep1 der ersten dielektrischen Beschichtung M1 kleiner als 36 nm ist und mehr bevorzugt zwischen 15,0 und 32,0 nm liegt.

3. Material nach Anspruch 1 oder 2, wobei die physikalische Dicke Ep4 der vierten dielektrischen Beschichtung M4 kleiner als 36,0 nm ist, mehr bevorzugt zwischen 15,0 und 32,0 nm liegt.

4. Material nach einem der vorstehenden Ansprüche
**dadurch gekennzeichnet, dass** die physikalische Dicke Ep2 der zweiten dielektrischen Beschichtung M2 kleiner als 65 nm ist.

5. Material nach einem der vorstehenden Ansprüche, wobei die physikalische Dicke Ep3 der dritten dielektrischen Beschichtung M3 kleiner als 66,0 nm ist und mehr bevorzugt zwischen 50,0 und 64,0 nm liegt.

6. Material nach einem der vorstehenden Ansprüche, wobei das Ep3/Ep2-Verhältnis zwischen der physikalischen Dicke der dritten dielektrischen Beschichtung M3 und der physikalischen Dicke der zweiten dielektrischen Beschichtung M2 zwischen 0,80 und 1,15 liegt, vorzugsweise zwischen 0,90 und 1,10 liegt und mehr bevorzugter zwischen 0,95 und 1,05 liegt.

7. Werkstoff nach einem der vorstehenden Ansprüche, wobei das Ep2/Ep1-Verhältnis zwischen der physikalischen Dicke der zweiten dielektrischen Beschichtung M2 und der physikalischen Dicke der ersten dielektrischen Beschichtung M1 größer als 1,70, vorzugsweise größer als 1,80 ist und mehr bevorzugt zwischen 2,0 und 4,0 liegt.

8. Werkstoff nach einem der vorstehenden Ansprüche, wobei das Verhältnis (Ep1+Ep4) / (Ep2+Ep3) zwischen der Summe der physikalischen Dicken der dielektrischen Beschichtungen M1 und M4 und der Summe der physikalischen Dicken der dielektrischen Beschichtungen M2 und M3 zwischen 0,20 und 0,54 liegt, vorzugsweise zwischen 0,25 und 0,52 liegt und mehr bevorzugt zwischen 0,30 und 0,46 liegt.

9. Material nach einem der vorstehenden Ansprüche,
**dadurch gekennzeichnet, dass** die Stapelung ferner mindestens eine Blockierschicht umfasst, die sich in Kontakt mit einer funktionellen Metallschicht befindet, ausgewählt aus den Metallschichten auf Basis eines Metalls oder einer Metalllegierung, Metallnitridschichten, Metalloxidschichten und Metalloxynitridschichten aus einem oder mehreren Elementen, ausgewählt aus Titan, Nickel, Chrom und Niob, wie eine Schicht aus Ti, TiN, TiOx, Nb, NbN, Ni, NiN, Cr, CrN, NiCr, NiCrN.

10. Werkstoff nach dem vorstehenden Anspruch, wobei die Gesamtdicke aller Blockierschichten, die mit den funktionellen Schichten in Kontakt stehen, kleiner als 5,0 nm, vorzugsweise kleiner als 3,0 nm ist und mehr bevorzugt zwischen 0,5 und 2,0 nm, einschließlich dieser Werte, liegt.

11. Material nach einem der vorstehenden Ansprüche, wobei die funktionellen Metallschichten auf Silberbasis (Ag1, Ag2, Ag3) physikalische Dicken (Ea1, Ea2, Ea3) haben und ihre Summe zwischen 25,0 und 45,0 nm liegt.

12. Material nach einem der vorstehenden Ansprüche, wobei die Stapelung ferner eine Schutzschicht umfasst.

13. Verglasung, umfassend mindestens ein Material nach einem der Ansprüche 1 bis 12, wobei die Verglasung vorzugsweise in Form einer Verbund- oder Mehrfachverglasung, insbesondere in Form einer Doppelverglasung oder Dreifachverglasung, vorliegt.

14. Verglasung nach dem vorstehenden Anspruch, die, wenn sie als Doppelverglasung vorliegt, eine Lichtdurchlässigkeit TL, die zwischen 50 % und 75 % liegt, aufweist.

15. Verglasung nach einem der Ansprüche 13 und 14, die, wenn sie als Doppelverglasung mit der Stapelung positioniert auf der Fläche 2 vorliegt einen solaren Faktor g von kleiner als 44 % aufweist.

16. Verglasung nach einem der Ansprüche 13 bis 15, die, wenn sie als Doppelverglasung mit der Stapelung positioniert auf der Fläche 2 vorliegt, eine Selektivität von größer als 1,70 aufweist.

17. Verglasung nach einem der Ansprüche 13 bis 16, die, wenn sie als Doppelverglasung mit der Stapelung positioniert auf der Fläche 2 vorliegt, die folgenden farbmetrischen Eigenschaften in Außenreflexion, Innenreflexion oder Transmission aufweist, definiert durch:
- Werte von a* zwischen -8 und +5,
- Werte von b* zwischen -5 und +5.

## Claims

1. Material comprising a transparent substrate coated on one side with a stack of thin layers comprising, successively from said side, an alternation of:
- three functional metallic layers based on silver, named starting from the substrate as first functional layer Ag1, second functional layer Ag2, and third functional layer Ag3; and
- four dielectric coatings named starting from said substrate side as M1, M2, M3, and M4, having respectively physical thicknesses Ep1, Ep2, Ep3, Ep4, each dielectric coating comprising a dielectric layer or a set of dielectric layers,
such that each functional metallic layer is arranged between two dielectric coatings,
said material being **characterized in that** the sum (Ep1 + Ep2 + Ep3 + Ep4) of the physical thicknesses of the four dielectric coatings (M1, M2, M3, and M4) is equal to or less than 210.0 nm, preferably between 130.0 and 200.0 nm, and more preferably between 150.0 and 190.0 nm, the physical thickness Ep1 of the first dielectric coating M1 is less than 40 nm,
the physical thickness Ep4 of the fourth dielectric coating M4 is less than 40.0 nm,
the physical thickness Ep2 of the second dielectric coating M2 is less than 70.0 nm,
the physical thickness Ep3 of the third dielectric coating M3 is less than 70.0 nm,
all dielectric layers of the stack have a thickness less than 47 nm,
the functional metallic layers based on silver (Ag1, Ag2, Ag3) have physical thicknesses (Ea1, Ea2, Ea3) and their sum is between 20.0 and 45.0 nm,
the ratio of the thickness of the second functional metallic layer to the thickness of the first functional metallic layer Ag2/Ag1 is between 0.90 and 1.50, inclusive.

2. Material according to claim 1, wherein the physical thickness Ep1 of the first dielectric coating M1 is less than 36 nm, and more preferably between 15.0 and 32.0 nm.

3. Material according to claim 1 or 2, wherein the physical thickness Ep4 of the fourth dielectric coating M4 is less than 36.0 nm, and more preferably between 15.0 and 32.0 nm.

4. Material according to any one of the preceding claims, **characterized in that** the physical thickness Ep2 of the second dielectric coating M2 is less than 65 nm.

5. Material according to any one of the preceding claims, wherein the physical thickness Ep3 of the third dielectric coating M3 is less than 66.0 nm, and more preferably between 50.0 and 64.0 nm.

6. Material according to any one of the preceding claims, wherein the ratio Ep3/Ep2 between the physical thickness of the third dielectric coating M3 and the physical thickness of the second dielectric coating M2 is between 0.80 and 1.15, preferably between 0.90 and 1.10, and more preferably between 0.95 and 1.05.

7. Material according to any one of the preceding claims, wherein the ratio Ep2/Ep1 between the physical thickness of the second dielectric coating M2 and the physical thickness of the first dielectric coating M1 is greater than 1.70, preferably greater than 1.80, and more preferably between 2.0 and 4.0.

8. Material according to any one of the preceding claims, wherein the ratio (Ep1+Ep4)/(Ep2+Ep3) between the sum of the physical thicknesses of dielectric coatings M1 and M4 and the sum of the physical thicknesses of dielectric coatings M2 and M3 is between 0.20 and 0.54, preferably between 0.25 and 0.52, and more preferably between 0.30 and 0.46.

9. Material according to any one of the preceding claims, wherein the stack further comprises at least one blocking layer in contact with a functional metallic layer, chosen from metallic layers based on a metal or a metallic alloy, metallic nitride layers, metallic oxide layers, and metallic oxynitride layers of one or more elements selected from titanium, nickel, chromium, and niobium, such as a layer of Ti, TiN, TiOx, Nb, NbN, Ni, NiN, Cr, CrN, NiCr, NiCrN.

10. Material according to the preceding claim, wherein the total thickness of all blocking layers in contact with the functional layers is less than 5.0 nm, preferably less than 3.0 nm, and more preferably between 0.5 and 2.0 nm, inclusive.

11. Material according to any one of the preceding claims, wherein the functional metallic layers based on silver (Ag1, Ag2, Ag3) have physical thicknesses (Ea1, Ea2, Ea3) and their sum is between 25.0 and 45.0 nm.

12. Material according to any one of the preceding claims, wherein the stack further comprises a protective layer.

13. Glazing comprising at least one material according to any one of claims 1 to 12, said glazing preferably being in the form of laminated or multiple glazing, in particular in the form of double glazing or triple glazing.

14. Glazing according to the preceding claim, having, when in the form of double glazing, a light transmission TL between 50% and 75%.

15. Glazing according to any one of claims 13 and 14, having, when in the form of double glazing with the stack positioned on face 2, a solar factor g less than 44%.

16. Glazing according to any one of claims 13 to 15, having, when in the form of double glazing with the stack positioned on face 2, a selectivity greater than 1.70.

17. Glazing according to any one of claims 13 to 16, having, when in the form of double glazing with the stack positioned on face 2, colorimetric characteristics in external reflection, internal reflection, or transmission defined by:
- a* values between -8 and +5,
- b* values between -5 and +5.
